(19) Europäisches Patentamt
European Patent Office
Office européen des brevets

(11) **EP 4 530 305 A1**

(12) **EUROPEAN PATENT APPLICATION**

(43) Date of publication:
**02.04.2025 Bulletin 2025/14**

(21) Application number: 23461654.8

(22) Date of filing: **29.09.2023**

(51) International Patent Classification (IPC):
***C08G 18/24*** *(2006.01)*    ***C08G 18/48*** *(2006.01)*
***C08G 18/76*** *(2006.01)*    ***C08G 65/26*** *(2006.01)*

(52) Cooperative Patent Classification (CPC):
**C08G 18/7621; C08G 18/246; C08G 18/4816; C08G 18/4845; C08G 18/485; C08G 18/4866; C08G 65/2609;** C08G 2110/0008; C08G 2110/005; C08G 2110/0083

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: PCC ROKITA Spolka Akcyjna
**56-120 Brzeg Dolny (PL)**

(72) Inventors:
- **PLOCIENIAK, Miroslaw
  51-531 WROCLAW (PL)**
- **MAKULA, Lukasz
  51-114 WROCLAW (PL)**
- **SALASA, Michal
  56-120 BRZEG DOLNY (PL)**

(74) Representative: **Wojasinska, Ewa et al
Polservice
Kancelaria Rzecznikow Patentowych Sp. z o.o.
Patent Team II
Bluszczanska 73
00-712 Warszawa (PL)**

(54) **POLYETHER POLYOL WITH REDUCED CONTENT OF PRIMARY HYDROXYL GROUPS, METHOD OF ITS PREPARATION AND USE FOR PRODUCING OF POLYURETHANE, METHOD FOR PRODUCING POLYURETHANE AND POLYURETHANE PRODUCED BY THIS METHOD AS WELL AS METHOD FOR REDUCING THE REACTIVITY OF POLYETHER POLYOL**

(57) The invention relates to a polyether polyol with reduced content of primary hydroxyl groups, comprising at least one internal block having oxyethylene groups and at least one terminal block having oxypropylene groups; and to a method for manufacturing of said polyether polyol, in which propylene oxide is dosed into the active reaction system in the capping step; and to a method for manufacturing of a polyurethane in which said polyether polyol is used; and to a polyurethane obtained by said method, preferably flexible polyurethane foam, particularly preferably viscoelastic flexible polyurethane foam. Furthermore, the invention relates to a method for reducing the reactivity of a polyether polyol having predefined reactivity.

EP 4 530 305 A1

**Description**

The present invention generally relates to the field of high-molecular compounds obtained in the polycondensation reaction with alkylene oxides, as well as plastics obtained as products of their polymerization with isocyanates. In more detail, the subject matter of the invention is a polyether polyol with reduced content of primary hydroxyl groups, a method for manufacturing thereof and a use thereof for manufacturing of polyurethane, a method for manufacturing of a polyurethane and a polyurethane obtainable by said method. Moreover, the subject matter is also a method for reducing the reactivity of a polyether polyol. The disclosure applies to a manufacturing of polyurethanes, preferably flexible polyurethane foams, particularly preferably viscoelastic flexible polyurethane foams.

During the manufacturing of polyether polyols by the oxyalkylation process, terminal hydroxyl groups are formed regardless of the catalyst and alkylene oxides used. These groups react with isocyanates during the manufacturing of polyurethanes. From this point of view, they are therefore the most important element of the structure of each polyether polyol used in manufacturing of polyurethanes. In industrial practice, propylene oxide, ethylene oxide, or mixtures of said oxides in various proportions are used to produce polyether polyols. Higher alkylene oxides are used less frequently and in small quantities for economic reasons. Generally, all these oxides can be classified as alkylene oxides. The type of alkylene oxide used has a significant impact on the type of terminal hydroxyl groups formed. Propylene oxide causes the formation of secondary hydroxyl groups, and ethylene oxide causes the formation of primary hydroxyl groups. Under typical conditions for manufacturing of polyurethanes, the primary hydroxyl groups are 3 times more reactive towards isocyanate groups than the secondary hydroxyl groups, as teaches, among others, book by M. Ionescu "Chemistry and Technology of Polyols for Polyurethanes, 1st Ed. ", Rapra Technology, Shrewsbury 2005, in chap. 2.9. "Reaction of Isocyanates with Cyclic Anhydrides" on page 18. The term "reactive groups" is used for primary hydroxyl groups, as opposed to secondary groups. Therefore, the content of primary hydroxyl groups in the polyol component is also a measure of its reactivity towards the isocyanate component.

In the field of manufacturing of flexible polyurethane foams, increasing the reactivity of polyether polyol towards isocyanate is most often a desirable feature, especially in the field of highly resilient polyurethane foams. Therefore, it is deliberately sought to increase the proportion of primary hydroxyl groups relative to all hydroxyl groups present in the polyol molecule. For this purpose, the following are used: (a) polyol chains are terminated with blocks consisting of ethylene oxide terminated with primary hydroxyl groups, or (b) a large excess of ethylene oxide in the dosed mixture. On the other hand, in some applications, such as in the field of viscoelastic polyurethane foams, increasing the reactivity of the polyol, e.g. by increasing the ratio of primary hydroxyl groups, is less desirable.

Viscoelastic foams, also known as memory foams, are one of the fastest-growing branches of polyurethane foams. They are used in high-quality mattresses and pillows. Viscoelastic foams are characterized by a delayed recovery to the original shape, depending on time and compression, and low resilience. This distinguishes them from HR foams (highly resilient) and those with standard resilience, which have much higher resilience and immediately recover to their original shape after compression.

Like most polyurethane foams, viscoelastic polyurethane foams are manufactured by reacting a polyol component with a polyisocyanate in the presence of a foaming agent. The foaming agent is usually water, which reacts with the isocyanate to produce carbon dioxide. Such a reaction is very desirable because $CO_2$ forms the cellular structure of the PU foam.

Typically, a polyol or polyols with lower relative molecular weight of 400 to 1500 and various functionalities are used together with one or more polyols with higher relative molecular weight, e.g. above 3000, and various functionalities, to produce viscoelastic foam. Depending on the composition of polyols, the foaming additives used (e.g. the amount of added water, catalysts, silicones) and the isocyanate index, a foam with characteristic recovery time and low resilience properties is obtained. Polyols preferred for use in this type of foams are most often manufactured by a polycondensation reaction with predominantly ethylene oxide and to a lesser extent propylene oxide. The polyol manufactured in this way is characterized by a high content of primary groups, which react faster with isocyanate than secondary groups, which is a technological limitation in the field of viscoelastic polyurethane foams.

In the state of the art, methods for manufacturing of viscoelastic foams from mixtures of polyols with low and high molecular weight and various ethylene oxide contents are known. However, such mixtures are not stable over time and separate into layers. To prevent this, a premix of polyether polyols is produced immediately before foaming the polyurethane foam. This necessity requires additional storage tanks and dosing lines at the foaming machine for these products, which is always associated with high costs for the customer, the need to purchase larger quantities of different raw materials and a greater possibility of errors when dosing the product during the foaming process.

Methods for manufacturing of viscoelastic foams using a standard silicone surfactant are also known to those skilled in the art. However, the foams obtained in this way, in which a low level of water was used in the formulation, are closed-cell foam, which is characterized by a very low airflow, which negatively affects the parameters of the product containing such foam, e.g. the comfort of use of the mattress in which such foam was used. Low comfort of use is mainly caused by the lack of proper heat circulation and incorrect moisture removal.

Moreover, methods for manufacturing of viscoelastic foams using toluene-2,4-diisocyanate (TDI) are also known in the art. Foams that use a low level of water in the formulation are very difficult to open, resulting in a very closed-cell foam during the reaction. To obtain open-cell foam, it is necessary to use specialized additives, mainly silicone surfactants. Such specialized surfactants are more expensive than standard silicones; their availability is limited; they are less stable over time and require the customer to invest in an additional dosing line and a storage tank, which is also associated with higher costs.

Finally, methods for manufacturing of viscoelastic foam with a low isocyanate index I < 85 are known to those skilled in the art. The use of a low isocyanate index reduces the cross-linking of the foam and results in the opening of the foam cells and the desired lower hardness. However, foaming using a low index leads to excessive reaction of the isocyanate with water, resulting in the formation of polyamines which, due to the insufficient amount of isocyanate groups in the mixture, do not react and do not form urethane bonds. Such polyamines produced in the reaction of isocyanate with water, e.g. toluene-2,4-diamine (TDA) and 4,4'-methylenedianiline (MDA), are responsible for the emission of volatile organic compounds (VOC) from the foam, which is why they are legally prohibited in polyurethane foams used to manufacture mattresses or furniture. Additionally, the use of a low index causes deterioration of the density distribution in the foam block after its seasoning.

Ahmadloo, Cookson, Borella et al. in document US 11124595 B2 described a polyol composition produced by polymerization of ethylene oxide and propylene oxide initiated by a mixture of at least two starters. The obtained polyol composition has from 5 to 30 mol-% of primary hydroxyl groups and from 40 to 63 wt.-% of oxyethylene groups. This composition is suitable for use in methods for manufacturing of viscoelastic foams, but reducing reactivity is achieved by using a mixture of polyether polyols.

Lear, Sloan and Pazos in document US 6083420 A described a polyoxypropylene polyol with high content of secondary hydroxyl groups, having from 0.5 to 15 wt.-% of oxyethylene groups in a chain, terminated with oxypropylene groups. The described polyol has low reactivity as well as a low content of oxyethylene groups.

Hager, Britt, McVey et al. in document US 8975335 B2 describe a polyol mixture containing, among others: polyether monoalcohol with a hydroxyl number of less than 28 mg KOH/g, having no more than 20 wt.-% of oxyethylene groups; polyether polyol with a hydroxyl number from 20 to 240 mg KOH/g, having at least 50 wt.-% oxyethylene groups; and a polyether polyol with a hydroxyl number from 47 to 300 mg KOH/g, having from 5 to 45 wt.-% of oxyethylene groups, wherein this polyol does not contain pure terminal EO blocks.

Reese, Bowles and Browne in document US 9879114 B2 describe a semi-batch process for manufacturing of block polyether polyols with low number average relative molecular weight (hydroxyl numbers from 200 to 500 mg KOH/g). The first and second blocks contain from 50 to 100 wt.-% of propylene oxide and from 0 to 50 wt.-% of ethylene oxide. There is a constantly added starter present in the mixture. Optionally, a third alkylene oxide block may be added. By this method, low-reactivity polyols are produced with low content of oxyethylene groups.

Examples of the manufacturing of viscoelastic polyurethane foams are found in the literature and are well-known to those skilled in the art. A detailed description of such compositions, methods for manufacturing of the foams and the foams themselves can be found, for example, in documents US 8975335 B2, US 2013/0079429 A1, or WO 2023/009423 A1.

A certain difficulty by manufacturing of viscoelastic polyurethane foams is the fact that it is impossible to obtain foam with the desired parameters using a single polyether polyol. Most often, compositions of three or more polyether polyols with different functionalities ranging from 1 to 8 and different relative molecular weights are used. The polyether polyols described so far in the state of the art can be used in the composition for the manufacturing of viscoelastic polyurethane foams, but none of the polyols described above can be used as the only polyol in the composition. None of the technological solutions described above allow for reducing the reactivity (measured as the content of primary hydroxyl groups) of polyether polyols that contain significant amounts of oxyethylene groups. Moreover, in the literature, there are no known polyether polyols with reduced reactivity or the content of primary hydroxyl groups, characterized by a high content of oxyethylene groups, which could simplify polyol compositions used to manufacture of viscoelastic polyurethane foams.

The information on general methods for determining parameters - such as: hydroxyl number, equivalent weight, functionality, content of oxyethylene groups, and content of primary hydroxyl groups - is included in the book by M. Ionescu "Chemistry and Technology of Polyols for Polyurethanes, 1st Ed.", Rapra Technology, Shrewsbury 2005, in chapter 3. "General Characteristics of oligo-polyols" on pages 31-49 and is hereby incorporated by reference in its entirety.

In the field of manufacturing of viscoelastic polyurethane foams, however, it is advantageous to reduce the reactivity of polyether polyols towards isocyanates by reducing the content of primary hydroxyl groups, while maintaining a relatively high ratio of oxyethylene groups in the polyol, in particular above 30 wt.-%, preferably above 50 wt.-%, particularly preferably above 75 wt.-% relative to the total weight of the polyol. A high ratio of these groups is desirable for applications in viscoelastic foams because it improves the parameters important for this type of foams. In particular, it extends the recovery time and increases the airflow parameter.

Methods for determining the recovery time and airflow parameter are known to those skilled in the art. The recovery time parameter - also referred to as the relaxation time - determines the time required for the foam to recover to 90 % of its initial height after being compressed to 25 % of this height in 60 s. The open-cell content parameter, also referred to as the airflow parameter, is defined as the airflow with constant pressure decrease expressed in $dm^3/s$.

Moreover, a high content of oxyethylene groups in polyols is desirable for economic reasons. The possibility of obtaining a predetermined (set) low reactivity with a simultaneous high ratio of oxyethylene groups - preferably in one product - allows for flexible adaptation of the product offer to the market situation. As long as ethylene oxide is cheaper than propylene oxide, there is no way so far to increase the ratio of ethylene oxide in the product up to 90 wt.-%, preferably 75 wt.-%, while maintaining reactivity, measured by the content of primary hydroxyl groups, at a low level, for example below 60 mol-%, preferably below 45 mol-%, even more preferably below 30 mol-%. Such polyether polyols with reduced reactivity or content of primary hydroxyl groups and high content of oxyethylene groups have not been known so far, therefore there is a need to provide them, together with a method for manufacturing of such polyether polyols with reduced reactivity or content of primary hydroxyl groups and high content of ethylene oxide groups. Preferably, the method for manufacturing of such polyether polyols should also be independent of the type of catalyst used.

The technical problem is, therefore, how to provide a polyether polyol with reduced reactivity or the content of primary hydroxyl groups, while having a high ratio of oxyethylene groups in the polyol structure, which can be used in polyol compositions used to manufacture the viscoelastic polyurethane foams. Additionally, the problem is how to provide a polyether polyol that can be used in the composition in combination with as few other polyether polyols as possible, especially not more than two. Moreover, another technical problem is how to provide a method for manufacturing of a polyether polyol with reduced reactivity or the content of primary hydroxyl groups and a high content of oxyethylene groups, and how to provide a method for manufacturing of polyurethane with improved properties of recovery time and airflow and with lower manufacturing costs compared to the polyurethanes available currently on the market.

This problem is solved according to the invention by a polyether polyol having features of the independent claim 1 with reduced content of primary hydroxyl groups, comprising: at least one internal block containing oxyethylene groups in an amount of from 30 to 100 wt.-% based on a total weight of said at least one internal block, and at least one terminal block consisting essentially of oxypropylene groups, wherein said polyether polyol is further characterized by a hydroxyl number in a range of 40 to 280 mg KOH/g and a functionality of from 2 to 6.

"Consisting essentially of" in the context of the present invention is to be understood to mean that the terminal block substantially comprises only the oxypropylene groups. However, this does not exclude the presence in said terminal block of admixtures/impurities normally resulting from the technological conditions typical for the processes of obtaining these types of polyether polyols previously known in the art for those skilled in the art.

Preferred embodiments of the polyether polyol according to the invention are defined in the dependent claims from 2 to 3.

Herein according to any aspect of the invention, the internal block in the polyether polyol of the invention with reduced content of primary hydroxyl groups may preferably contain oxyethylene groups in an amount of from 50 to 100 wt.-%, preferably from 70 to 100 wt.-%, based on a total weight of said at least one internal block.

Herein according to any aspect of the invention, the content of primary hydroxyl groups in the polyether polyol according to the invention may be below 50 mol-%, preferably below 45 mol-%, further preferably below 30 mol-%, even further preferably below 20 mol-%.

Moreover, the object of the invention is also a method for manufacturing of the polyether polyol having features of the independent claim 4 with reduced content of primary hydroxyl groups, as defined in any one of claims from 1 to 3, comprising a capping step in which propylene oxide is dosed to an active reaction system containing a catalyst and a starting polyether polyol, having from 30 to 100 wt.-% of oxyethylene groups based on a total weight of said polyether polyol, so that the polyether polyol with reduced content of primary hydroxyl groups is obtained, as defined in any one of claims from 1 to 3, in which the content of primary hydroxyl groups is reduced by 30 to 70 mol-% with respect to the content of primary hydroxyl groups in the starting polyether polyol.

Preferred embodiments of the process for manufacturing of the polyether polyol according to the invention are defined in the dependent claims 5 to 9.

Preferably according to any aspect of the invention, the propylene oxide may be dosed in an amount according to the equation:

$$m_{\mathrm{PO}} = \frac{1.21}{EW^{0.23}} \cdot \left[ 0.0067 \cdot \left( \frac{\%\mathrm{EO}}{100\,\%} \right)^2 - 0.61 \cdot \left( \frac{\%\mathrm{OH}_1}{100\,\%} \right) \right],$$

wherein:

- $m_{\mathrm{PO}}$ is weight of propylene oxide to be dosed per each 100 kg of the starting polyether polyol, wherein said weight is expressed in kilograms;

- *EW* is a parameter numerically equal to the equivalent weight of the starting polyether polyol, which could be calculated on the basis of a determined hydroxyl number of the starting polyether polyol (*OHV*) by means of the formula: $EW = 56\,110\,mg/OHV$, wherein the *OHV* value is expressed in mg KOH/g;
- %EO is weight ratio of the oxyethylene groups in the starting polyether polyol, wherein said weight ratio is expressed as a weight percentage based on a total weight of the starting polyether polyol;
- %OH$_1$ is a predetermined molar ratio of primary hydroxyl groups in the polyol with reduced content of primary hydroxyl groups, wherein said molar ratio is expressed as a molar percentage, and its value is numerically smaller than %EO value.

Herein according to any aspect of the invention, the content of primary hydroxyl groups in the polyether polyol with reduced content of primary hydroxyl groups may advantageously be reduced relative to the content of primary hydroxyl groups in the starting polyether polyol by 30 to 60 mol-%, preferably by 40 to 50 mol-%, further preferably by 45 to 50 mol-%.

Herein according to any aspect of the invention, the catalyst may be a catalyst selected from the group consisting of an anionic catalyst, a double metal cyanide catalyst, and a combination thereof.

Herein according to any aspect of the invention, the catalyst may be the anionic catalyst, preferably an alkali metal hydroxide, further preferably the potassium hydroxide.

Herein according to any aspect of the invention, the starting polyether polyol has a functionality of from 2 to 6, preferably from 2 to 4, further preferably from 2 to 3, hydroxyl groups per mole.

A further object of the invention is also a method for manufacturing of a polyurethane, having features of the independent claim 10, based on the polyether polyol as defined in any one of claims from 1 to 3, characterized in that the polyether polyol as described in any one of claims from 1 to 3 is brought into contact with at least one isocyanate, preferably selected from the group consisting of 2,4-diisocyanato-1-methylbenzene (TDI), 1,1'-methylenebis(4-isocyanatobenzene) (MDI), and polymeric MDI.

Another object of the invention is also a polyurethane, having features of the independent claim 11, based on the polyether polyol as defined in any one of claims from 1 to 3 obtainable by the method according to claim 10.

Preferred embodiments of the polyurethane according to the invention are defined in dependent claims from 12 or 13.

Herein according to any aspect of the invention, the polyurethane may preferably be a flexible polyurethane foam, preferably a viscoelastic flexible polyurethane foam.

Herein according to any aspect of the invention, the polyurethane may advantageously have an airflow above 2.5 dm$^3$/s.

Another object of the invention is a use of the polyether polyol, having features of the independent claim 14, with reduced content of primary hydroxyl groups as defined in any one of claims from 1 to 3 for manufacturing of a polyurethane.

A further object of the invention is a method for reducing reactivity, having features of the independent claim 15, of a starting polyether polyol, having from 30 to 100 wt.-% of oxyethylene groups based on a total weight of said polyether polyol, characterized in that the propylene oxide is dosed into an active reaction system, comprising a catalyst and the starting polyether polyol, so that a reactivity of the polyether polyol is reduced by 30 to 70 mol-% with respect to an initial reactivity, preferably by 40 to 50 mol-%, further preferably by 45 to 50 mol-%.

Unexpectedly, it turned out that a high ratio of the oxyethylene groups in the polyether polyol according to the invention with simultaneously reduced content of primary hydroxyl groups allowed - as a result of capping the polyether polyol with the at least one terminal block consisting essentially of oxypropylene groups

- for the manufacturing of open-cell foam with increased airflow parameter using standard silicone, whereby extending the recovery time. To produce the viscoelastic foam according to the invention, in addition to the discussed polyol according to the invention with reduced content of primary hydroxyl groups, at most one more standard polyol is needed, which the foam manufacturer always has on a production line, which significantly simplifies the foam production process and reduces the risk of errors when configuring the foaming machine. Therefore, the use of this type of polyether polyol allows to avoid problems with instability of polyether polyol compositions with different molecular weights and different alkylene oxide contents and to simplify the formulation of viscoelastic foams by reducing the number of ingredients in the polyol component.

Anywhere in the specification and claims, unless clearly stated otherwise, the reactivity of the polyol is understood as the content of primary hydroxyl groups - reactive groups.

Whenever an EO designation is used in the specification, those skilled in the art understand that it refers to ethylene oxide (oxirane) or the corresponding oxyethylene groups of the formula -CH$_2$-CH$_2$-O-, whereas whenever a PO designation is used in the specification, it refers to propylene oxide (methyloxirane) or the corresponding oxypropylene groups with the formula -CH$_2$-CH$_2$(CH$_3$)-O-.

Reference herein to "an aspect of the invention" means that the particular feature described in connection with one aspect of the invention may be included in at least one embodiment of the present invention. Therefore, the phrase "according to any aspect" and similar phrases throughout this specification mean that a given feature may be implemented in any one of the embodiments of the invention and freely combined with the remaining features of the invention, and thus it remains independent of other preferred features of the invention.

**Examples**

The invention is illustrated by the following examples. The examples are provided only to illustrate the invention and do not constitute its limit. The following materials were used in the examples:

| | |
|---|---|
| Ethylene glycol | ethane-1,2-diol of technical purity, containing no more than 0.2 % of water. |
| Glycerine | propane-1,2,3-triol of pharmaceutical grade, containing no more than 0.1 % of water. |
| Rokopol M1170 | reactive polyoxyalkylene triol based on glycerin with relative molecular weight of approximately 5000, commercially available and obtained from PCC Rokita SA. |
| Rokopol F3600 | glycerin-based polyoxyalkylene triol with relative molecular weight of approximately 3600, commercially available and obtained from PCC Rokita SA |
| Rokopol EP8555.01 | reactive polyoxyalkylene triol based on glycerin with relative molecular weight of approximately 1000, commercially available and obtained from PCC Rokita SA. |
| Rokopol V700 | glycerin-based polyoxyalkylene triol with relative molecular weight of approximately 700, commercially available and obtained from PCC Rokita SA. |
| 50 % potassium hydroxide solution | aqueous solution of potassium hydroxide, commercially available and obtained from Spolchemie |
| Solid potassium hydroxide | raw material, technically pure, in a form of flakes, commercially available and obtained from Unid, the content of the main ingredient is 90 % |
| DMC catalyst | double metal cyanide type catalyst, prepared by reacting an aqueous solution of a metal salt with an aqueous solution of a metal cyanide salt in the presence of at least one organic complexing ligand, commercially available under the name MEO-DMC and obtained from Mexeo |
| Propylene oxide | 1,2-epoxypropane with purity of at least 99.97 % (GC), water content up to 0.02 %, commercially available and obtained from PCC Rokita SA |
| Ethylene oxide | oxirane with purity of at least 99.9 %, water content up to 0.01 %, commercially available and obtained from Orlen |
| TDI 80 | a mixture of 80 % 2,4-diisocyanatotoluene and 20 % 2,6-diisocyanatotoluene, commercially available and obtained from Borsodchem |
| Foam additives: | aliphatic amines which are catalysts for the reaction of isocyanates with |
| Niax A-1, Niax A-33 | alcohols, commercially available, obtained from Momentive |
| Tegostab BF2370 | commercially available silicone surfactant, obtained from Evonik |
| Niax L629 | commercially available silicone surfactant, obtained from Momentive |
| Kosmos 54 | zinc salt of fatty acid with solvent, catalyst commercially available and obtained from Evonik |
| Kosmos T9 | tin octanoate, a catalyst commercially available and obtained from Evonik |
| Ortegol 204 | crosslinking agent commercially available and obtained from Evonik |

All the above materials were used in the available form, without additional preparation.

The hydroxyl number was determined using the D method in accordance with the ASTM D4274-16 standard.

The content of primary hydroxyl groups in polyols was determined in accordance with the ASTM D4273-11 standard. Its value is expressed as a molar percentage (mol-%) of primary hydroxyl groups based on total number of hydroxyl groups.

The content of oxyethylene groups is a value calculated on the basis of the amount of ethylene oxide dosed in the polyol production process, taking into account the content of oxyethylene groups present in the starter. The content of oxyethylene groups is expressed as a weight percentage (wt.-%) based on the total weight of the polyol.

The density of the foams was determined in accordance with the ISO 845 standard.

The rise time, shrinkage, and relapse of the foams were determined using a Foamat foaming device.

The CV40 hardness and recovery time of the foams were determined using the Zwick/Roel Z010 device in accordance with the ISO 3386-1 standard.

All numerical values herein are to be understood as having been determined to the standard accuracy permitted by the method of determination. Unless the individual methods indicate otherwise, it should be understood that the numerical value for a specific parameter may differ from the value specified in the specification by ±10 %.

All numerical ranges given in this specification in the format "from ... to ..." are to be understood as including the ends of that range, unless otherwise indicated.

The expression "at least one" or "one or more" preferably means "1 or 2 or 3 or 4 or 5 or 6 or 7 or 8 or 9 or 10 or more".

Reference herein to an "embodiment" means that the particular feature described in connection with the indicated embodiment is embodied in at least one embodiment of the present invention. Thus, the phrase "in an example" and similar phrases herein may or may not refer to the same embodiment.

Comparative example P1 (not according to the invention - synthesis of a reactive diol containing 100 wt.-% of oxyethylene groups)

500 g of ethylene glycol and 3.2 g of a catalyst in the form of solid potassium hydroxide were loaded into a steel pressure reactor equipped with a mechanical stirrer and temperature control. The gas space in the reactor above the initial charge was deprived of oxygen from the air by nitrogen barbotage for 30 min at a temperature ranging from 20 to 30 °C. Then it was heated to 125 °C and 2700 g of ethylene oxide was dosed at such a rate that the pressure in the reactor did not exceed 3 bar, maintaining the temperature in the range from 120 to 130 °C by using a temperature control system. The product was annealed at 125 °C for 60 min until constant pressure was reached. Volatile organic compounds were next removed by using nitrogen barbotage under vacuum. The product was neutralized throughout 3 h with excess magnesium silicate (150 g) and then separated from the solids by centrifugation.

Reactive polyoxyalkylene diol was obtained in the form of a light yellow, clear liquid having a hydroxyl number of 282 mg KOH/g, the content of oxyethylene groups of 100 wt.-% and the content of primary hydroxyl groups equal to 100 mol-%.

Example W2 (according to the invention - synthesis of a diol with reactivity reduced to 44 mol-%)

500 g of ethylene glycol and 3.2 g of a catalyst in the form of solid potassium hydroxide were loaded into a steel pressure reactor equipped with a mechanical stirrer and temperature control. The gas space in the reactor above the initial charge was deprived of oxygen from the air by nitrogen barbotage for 30 min at a temperature ranging from 20 to 30 °C. Then it was heated to 125 °C and 2700 g of ethylene oxide was dosed at such a rate that the pressure in the reactor did not exceed 3 bar, maintaining the temperature in the range from 120 to 130 °C by using a temperature control system. The product was annealed at 125 °C for 60 min until constant pressure was reached. An active reaction system of the starting polyol having a primary hydroxyl group content of 100 mol-% was obtained.

Equation 1 for calculating the amount of propylene oxide to reduce reactivity has the following variable values: $EW = 199$, $\%EO = 100$ wt.-%, $\%OH_1 = 45$ mol-%, therefore the calculated $m_{PO}$ value is 14.2 kg of propylene oxide/100 kg of polyol, which corresponds to 454 g of propylene oxide, which should be dosed into the active reaction system in order to reduce the reactivity of the polyol.

The temperature was reduced to 115 °C and 460 g of propylene oxide was dosed. The product was annealed at 115 °C for 120 min until constant pressure was reached. Volatile organic compounds were next removed by using nitrogen barbotage under vacuum. The product was neutralized throughout 3 h with excess magnesium silicate (180 g) and then separated from the solids by centrifugation.

A polyoxyalkylene diol with reduced reactivity was obtained in the form of a light yellow, clear liquid having a hydroxyl number of 251 mg KOH/g, a content of oxyethylene groups of 88 wt.-% and a content of primary hydroxyl groups of 44 mol-%. The terminal block consisting of oxypropylene groups was achieved by dosing propylene oxide, and the content of primary hydroxyl groups was reduced from 100 mol-% to 44 mol-%.

Example W3 (according to the invention - synthesis of triol with reactivity reduced to approximately 18 mol-%)

For the reaction system, consisting of:

- a steel pressure reactor with a capacity of 900 L, equipped with a heating and cooling jacket, temperature and pressure measurement devices, and a mechanical stirrer;
- a small circulation loop containing the necessary DN25 piping, a displacement pump, a heat exchanger, and an injector;
- a large circulation loop containing the necessary DN80 piping, a positive displacement pump, a heat exchanger, and an injector;
- an independent ethylene oxide and propylene oxide dosing systems;

- a temperature control system, equipped with a heating and cooling oil system for feeding the reactor jacket, and heat exchangers of both circulation circuits,

70 kg of glycerin and 2.2 kg of a catalyst in the form of a 50 wt.-% aqueous solution of potassium hydroxide was dosed. Mixing and a small circulation loop were started. The initial charge was heated to 120 °C, and then the nitrogen barbotage under vacuum was performed for 300 min to remove water from the charge. Then, the barbotage was turned off and an inertization cycle was performed, increasing the pressure in the reactor four times with nitrogen to 3 bar, and then venting to atmospheric pressure. After inertization, a nitrogen pressure of 2 bar was left in the reactor and the temperature was maintained at 120 °C.

Then, the dosing of a mixture of 200.5 kg of propylene oxide and 265.6 kg of ethylene oxide began. Initially, oxides were dosed at a total rate of 40 kg/h. Dosing was carried out while maintaining the temperature in the reactor at 120 °C. After dosing 10 wt.-% of oxides dosing was stopped, the product was annealed for 30 min, a large circulation loop was started, and then the reactor was vented and nitrogen barbotage was performed under vacuum for 30 min. The barbotage was turned off and an inertization cycle was performed, increasing the pressure in the reactor four times with nitrogen to 3 bar, and then venting to atmospheric pressure. After inertization, a nitrogen pressure of 3 bar was left in the reactor. After the temperature was stabilized, oxides dosing was resumed. The temperature was still maintained at 120 °C and the total oxides dosing rate was increased to 80 kg/h.

After dosing the entire amount of the mixture of propylene oxide and ethylene oxide, the product was annealed at 120 °C for 90 minutes until constant pressure was reached. An active polyol reaction system was obtained with a hydroxyl number of 240 mg KOH/g and a content of primary hydroxyl groups (reactivity) of 30 mol-%.

Equation 1 for calculating the amount of propylene oxide to reduce reactivity has the following variable values: $EW$ = 234, %EO = 50 wt.-%, %$OH_1$ = 18 mol-%, therefore, the calculated $m_{PO}$ value is 2.0 kg propylene oxide/100 kg polyol, which corresponds to 11 kg of propylene oxide.

At a temperature of 120 °C, 12 kg of propylene oxide was dosed at a rate of 12 kg/h. The product was annealed at 120 °C for 120 min until constant pressure was reached. The reactor was vented at 120 °C to atmospheric pressure. Volatile organic compounds were next removed by nitrogen barbotage under vacuum for 120 min, maintaining the temperature at 120 °C.

The product was cooled to 90 °C and sent in its entirety to the neutralization system, consisting of:

- a steel glass-lined pressure reactor with a capacity of 900 L, equipped with a heating and cooling jacket, temperature and pressure measuring devices, and a mechanical stirrer;
- a circulation loop including the necessary DN80 piping, displacement pump, and heat exchanger;
- a temperature control system, equipped with a heating and cooling oil system for feeding the reactor jacket, and a circulation heat exchanger;
- a stirrer and circulation loop were started, 5 kg of disodium pyrophosphate and 1 kg of magnesium silicate were added to the reactor, and then the reactor was filled with nitrogen to a pressure of 2 bar and 4 kg of demineralized water was dosed at a rate of 16 kg/h. The temperature was increased to 120 °C and maintained for 3 h. The reactor was vented to atmospheric pressure. The water was then removed by nitrogen barbotage under vacuum for 240 min, maintaining the temperature at 120 °C, and then the product was cooled to 100 °C,

100 kg of the product was sent to a tank in which the filtration aid suspension was prepared by adding 1 kg of ground, expanded perlite and stirring with a mechanical mixer for 30 min. In a pressure candle filter with filtration area of 1 $m^2$, a filter cake was prepared by using the prepared filtration aid suspension. Then, the entire product was filtered through the obtained cake, obtaining the sodium and potassium ion content below 10 mg/kg.

A polyoxyalkylene triol with reduced reactivity was obtained in the form of a colorless, clear liquid with a hydroxyl number of 230 mg KOH/g and a content of oxyethylene groups of 49 wt.-% and the content of primary hydroxyl groups of 18 mol-%. The terminal block consisting of oxypropylene groups was achieved by dosing propylene oxide, and the content of primary hydroxyl groups (reactivity) was reduced from about 30 mol-% to 18 mol-%.

Comparative example P4 (without using the method according to the invention - synthesis of a reactive polyol containing 73 wt.-% of oxyethylene groups)

750 g of Rokopol EP8555.01 polyol (with functionality f = 3) and 0.31 g of the MEO-DMC catalyst were loaded into a steel pressure reactor equipped with a mechanical stirrer and temperature control. The initial charge was heated to 135 °C and dehydrated under vacuum with nitrogen barbotage for 60 min. Next, 85 g of propylene oxide and 28 g of ethylene oxide were dosed and paused until the catalyst had been activated. After stabilizing the temperature and pressure, a mixture of 537 g of propylene oxide and 1610 g of ethylene oxide was dosed at such a rate that the pressure in the reactor did not exceed 3 bar, maintaining the temperature in the range from 130 to 140 °C by using a temperature control system.

The product was annealed at 135 °C for 30 min until constant pressure was reached. Volatile organic compounds were next removed by using nitrogen barbotage under vacuum. Due to the use of a DMC catalyst, there was no need to purify and filter the polyol.

A reactive polyoxyalkylene triol was obtained in the form of a viscous liquid with a hydroxyl number of 42 mg KOH/g and a content of oxyethylene groups of 73 wt.-% and the content of primary hydroxyl groups of 63 mol-%.

Example W5 (according to the invention - synthesis of a polyol having a reactivity reduced to 44 mol-%)

750 g of Rokopol EP8555.01 polyol (with functionality f = 3) and 0.31 g of the MEO-DMC catalyst were loaded into a steel pressure reactor equipped with a mechanical stirrer and temperature control. The initial charge was heated to 135 °C and dehydrated under vacuum with nitrogen barbotage for 60 min. Next, 85 g of propylene oxide and 28 g of ethylene oxide were dosed and paused until the catalyst had been activated. After stabilizing the temperature and pressure, a mixture of 537 g of propylene oxide and 1610 g of ethylene oxide was dosed at such a rate that the pressure in the reactor did not exceed 3 bar, maintaining the temperature in the range from 130 to 140 °C by using a temperature control system. The product was annealed at 135 °C for 30 min until constant pressure was reached. An active polyol reaction system having a primary hydroxyl group content (reactivity) of 63 mol-% was obtained.

Equation 1 for calculating the amount of propylene oxide to reduce reactivity has the following variable values: $EW = 1336$, $\%EO = 73.4$ wt.-%, $\%OH_1 = 45$ mol-%, therefore, the calculated $m_{PO}$ value is 2.0 kg propylene oxide/100 kg polyol, which corresponds to 60 g propylene oxide.

Still maintaining the temperature in the range from 130 to 140 °C, 60 g of propylene oxide was dosed, annealed at 135 °C for another 30 min to reach constant pressure, and the volatile organic compounds were next removed by using nitrogen barbotage under vacuum. Due to the use of a DMC catalyst, there was no need to purify and filter the polyol.

A polyoxyalkylene triol with reduced reactivity was obtained in the form of a viscous liquid having a hydroxyl number of 41 mg KOH/g, a content of oxyethylene groups of 72 wt.-%, and primary hydroxyl group content of 44 mol-%. The terminal block consisting of oxypropylene groups was achieved by dosing propylene oxide, and the content of primary hydroxyl groups (reactivity) was reduced from 63 mol-% to 44 mol-%.

Example W6 (a use of the polyol according to the invention in the formulation of a viscoelastic foam)

A mixture, containing:

80 parts of polyol obtained according to example W3;
20 parts of Rokopol F3600;
1.6 parts of water total;
0.10 parts of Niax A-1 catalyst;
0.10 parts of Niax A-33 catalyst;
1.2 parts of Tegostab BF2370 surfactant;
1.0 part of cross-linking agent Ortegol 204;
0.20 parts of Kosmos 54 catalyst; and
41.68 parts of TDI 80,

was poured into an open mold with a base of 20 × 20 cm, wherein the isocyanate index was 95.

The free-rise foam was obtained, having density of 43.6 kg/m$^3$, a growth time of 125 s, a relapse of 0.2 %, a shrinkage of 0.2 %, a CV40 hardness of 1.0 kPa, a recovery time of 5 s and an airflow of 3.0 dm$^3$/s. In the above-mentioned example, a viscoelastic foam was obtained by using only two polyols, one of which is a standard polyol widely available on the market, much cheaper than other polyols, while the second polyether polyol is the polyol from embodiment W3. This provides an advantage over other polyol compositions which are generally unstable in storage, more expensive, and more complicated to prepare due to the large number of polyol components, as seen in Example P9. The foam obtained in example W6 is an open-cell foam with extended recovery time. Standard silicone was used to produce it. Using mainly polyols based on propylene oxide, a closed-cell foam would be obtained and even shrinkage of the foam could occur, which is visible in example P7. In turn, using mainly polyols rich in ethylene oxide, an open-cell foam without recovery time (recovery time less than 1 s) would be produced, which is visible in example P8. By producing foam with an isocyanate index above 85, the risk of TDA formation is reduced, which adversely affects the emission of volatile organic compounds from the foam and its presence above 5 ppm is prohibited in the foam. The use of a low index below 85 to obtain an open-cell foam is seen in Example P9.

Comparative examples P7, P8 and P9 (comparative, without the use of the polyol according to the invention)

The procedure was the same as in Example W6, with the difference that a mixture containing the ingredients according to the table below was poured into an open mold with a base of 20 × 20 cm.

Table 1. Comparison of the composition of the foam according to the invention with reduced reactivity (example W6) with comparative foams not prepared according to the invention (P7, P8, P9).

|  | Example W6 | Comparative Example P7 | Comparative Example P8 | Comparative Example P9 |
|---|---|---|---|---|
| **Polyol component [parts]** |  |  |  |  |
| Polyol W3 | 80 | - | - | - |
| Rokopol F3600 | 20 | 20 | 20 | 28 |
| Rokopol V700 | - | 80 | - | 65 |
| Rokopol M1170 | - | - | 80 | 7 |
| **Isocyanate component** |  |  |  |  |
| TDI 80 [g] | 44.53 | 45.12 | 21.42 | 38.95 |
| Isocyanate index | 95 | 95 | 95 | 90 |
| **Water content (total)** | 1.6 | 1.6 | 1.6 | 1.6 |
| **Niax A-1** | 0.1 | 0.1 | 0.1 | 0.2 |
| **Niax A-33** | 0.1 | 0.1 | 0.1 | 0.3 |
| **Ortegol 204** | 1 | 1 | 1 | 1.0 |
| **Tegostab BF2370** | 1.2 | 1.2 | 1.2 | 1.2 |
| **Niax L629** | - | - | - | 1.5 |
| **Kosmos 54** | 0.2 | 0.2 | 0.2 | - |
| **Kosmos T9** | - | - | - | 0.04 |

Table 2. Comparison of the features of the foam according to the invention with reduced reactivity (example W6) with comparative foams not prepared according to the invention.

| | Example W6 | Comparative Example P7 | Comparative Example P8 | Comparative Example P9 |
|---|---|---|---|---|
| **Rise time [s]** | 125 | 197 | 100 | 124 |
| **Relapse [%]** | 0.2 | shrink | 0.5 | 0.2 |
| **Shrinkage [%]** | 0.6 | | 1.0 | 0.3 |
| **Density [kg/m$^3$]** | 43.6 | | 45.9 | 43.5 |
| **Hardness CV40 [kPa]** | 1.0 | | 1.1 | 1.6 |
| **Recovery time [s]** | 3.0 | | - | 15.0 |
| **Airflow [dm$^3$/s]** | 3.0 | | 3.1 | 0.2 |

Analogous foams can be obtained by using other isocyanates suitable for use in viscoelastic foams known to those skilled in the art, e.g. isocyanates selected from the group consisting of: 2,4-diisocyanato-1-methylbenzene (TDI), 1,1'-methylenebis(4-isocyanatobenzene) (MDI), and polymeric MDI.

A summary of the experimental results for polyether polyols is presented in the table below.

Table 3. Comparison of properties of polyether polyols according to examples P1, W2, P3ᵃ, W3, P4, W5

| | Example P1 (not according to the invention) | Example W2 (according to the invention) | Example W3 | | Example P4 (not according to the invention) | Example W5 (according to the invention) |
|---|---|---|---|---|---|---|
| | | | a(not according to the invention) | b(according to the invention) | | |
| *f* / [OH/mol] | 2 | 2 | 3 | 3 | 3 | 3 |
| *EW* | 199 | 223.5 | 234 | 244 | 1336 | 1368.5 |
| *OHV* / [mg KOH/g] | 282 | 251 | 240 | 230 | 42 | 41 |
| %EO / 100 wt.-% | 100 | 88 | 50 | 49 | 73 | 72 |
| %OHi/ 100 mol-% | 100 | 44 | 30 | 18 | 63 | 44 |
| **Reduction of reactivity** | - | -56 % | - | -40% | - | -30% |
| a - starting polyol, characterized without separating b - polyol with reduced content of primary hydroxyl groups | | | | | | |

As can be seen from Table 3 above, the invention provides polyether polyols with high content of oxyethylene groups, but with reduced reactivity, while maintaining the remaining product parameters.

In particular, the described embodiments indicate that each embodiment may include the same particular preferred feature, but all embodiments do not necessarily include that feature. Furthermore, when a particular feature is described in connection with an embodiment, those skilled in the art may implement such feature in connection with other embodiments, whether or not clearly described.

**Claims**

1.    A polyether polyol with reduced content of primary hydroxyl groups, comprising:

    a) at least one internal block containing oxyethylene groups in an amount of from 30 to 100 wt.-% based on a total weight of the at least one internal block; and
    b) at least one terminal block consisting essentially of oxypropylene groups,

having a hydroxyl number in a range of from 40 to 280 mg KOH/g and a functionality of from 2 to 6.

2.    The polyether polyol with reduced content of primary hydroxyl groups according to claim 1, wherein the at least one internal block contains the oxyethylene groups in an amount of from 50 to 100 wt.-%, preferably from 70 to 100 wt.-%, based on a total weight the at least one internal block.

3.    The polyether polyol according to claim 1 or claim 2, wherein the content of primary hydroxyl groups in the polyether polyol is below 50 mol-%, preferably below 45 mol-%, further preferably below 30 mol-%, even further preferably below 20 mol-%.

4.    A method for manufacturing of the polyether polyol with reduced content of primary hydroxyl groups, as defined in any one of claims from 1 to 3, comprising a capping step, in which propylene oxide is dosed into an active reaction system containing a catalyst and a starting polyether polyol, which has from 30 to 100 wt.-% of oxyethylene groups based on a total weight the polyether polyol, so that the polyether polyol with reduced content of primary hydroxyl groups is obtained, as defined in any one of claims from 1 to 3, in which the content of primary hydroxyl groups is reduced by 30 to 70 mol-% with respect to the content of primary hydroxyl groups in the starting polyether polyol.

5.    The method for manufacturing according to claim 4, wherein the propylene oxide is dosed in an amount according to the equation:

$$m_{\mathrm{PO}} = \frac{1.21}{EW^{0.23}} \cdot \left[ 0.0067 \cdot \left( \frac{\%\mathrm{EO}}{100\,\%} \right)^2 - 0.61 \cdot \left( \frac{\%\mathrm{OH_1}}{100\,\%} \right) \right],$$

wherein:

- $m_{PO}$ is weight of the propylene oxide to be dosed per each 100 kg of the starting polyether polyol, wherein said weight is expressed in kilograms;
- $EW$ is a parameter numerically equal to the equivalent weight of the starting polyether polyol, which can be calculated on the basis of a determined hydroxyl number of the starting polyether polyol ($OHV$), by means of the formula: $EW = 56\ 110\ mg/OHV$, wherein the $OHV$ value is expressed in mg KOH/g;
- %EO is weight ratio of the oxyethylene groups in the starting polyether polyol, wherein said weight ratio is expressed as a weight percentage based on a total weight of the starting polyether polyol;
- $\%OH_1$ is a predetermined molar ratio of the primary hydroxyl groups in the polyol with reduced content of primary hydroxyl groups, wherein said molar ratio is expressed as a molar percentage, and its value is numerically smaller than %EO value.

6. The method for manufacturing of the polyether polyol according to claim 4 or claim 5, wherein the content of primary hydroxyl groups in the polyether polyol with reduced content of primary hydroxyl groups is reduced relative to the content of primary hydroxyl groups in the starting polyether polyol by 30 to 60 mol-%, preferably by 40 to 50 mol-%, further preferably by 45 to 50 mol-%.

7. The method for manufacturing of the polyether polyol according to any one of claims from 4 to 6, wherein the catalyst is a catalyst selected from the group consisting of an anionic catalyst, a double metal cyanide catalyst, and a combination thereof.

8. The method for manufacturing of the polyether polyol according to any one of claims from 4 to 7, wherein the catalyst is the anionic catalyst, preferably an alkali metal hydroxide, further preferably the potassium hydroxide.

9. The method for manufacturing of the polyether polyol according to any one of claims from 4 to 8, wherein the starting polyether polyol has a functionality of from 2 to 6, preferably from 2 to 4, further preferably from 2 to 3, hydroxyl groups per mole.

10. A method for manufacturing of a polyurethane based on the polyether polyol as defined in any one of claims from 1 to 3, **characterized in that** the polyether polyol as defined in claim 1 or claim 2 is brought into contact with at least one isocyanate, preferably selected from the group consisting of 2,4-diisocyanato-1-methylbenzene (TDI), 1,1'-methylenebis(4-isocyanatobenzene) (MDI), and polymeric MDI.

11. A polyurethane based on the polyether polyol as defined in any one of claims from 1 to 3 obtainable by the method according to claim 10.

12. The polyurethane according to claim 11, wherein said polyurethane is a flexible polyurethane foam, preferably a viscoelastic flexible polyurethane foam.

13. The polyurethane according to claim 12, wherein said polyurethane has an airflow above 2.5 dm$^3$/s.

14. A use of the polyether polyol with reduced content of primary hydroxyl groups as defined in any one of claims from 1 to 3 for manufacturing of a polyurethane.

15. A method for reducing the reactivity of a starting polyether polyol having from 30 to 100 wt.-% of oxyethylene groups based on a total weight of said polyether polyol, **characterized in that** the propylene oxide is dosed into an active reaction system, comprising a catalyst and the starting polyether polyol, so that reactivity of the polyether polyol is reduced by 30 to 70 mol-% with respect to initial reactivity, preferably by 40 to 50 mol-%, further preferably by 45 to 50 mol-%.

Europäisches
Patentamt

European
Patent Office

Office européen
des brevets

## EUROPEAN SEARCH REPORT

Application Number

**EP 23 46 1654**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/136189 A1 (DOW GLOBAL TECHNOLOGIES LLC [US]) 26 July 2018 (2018-07-26) * claims 1-13 * | 1-15 | INV. C08G18/24 C08G18/48 C08G18/76 C08G65/26 |
| X | WO 2013/043645 A1 (BAYER MATERIALSCIENCE LLC [US]) 28 March 2013 (2013-03-28) * claims 1-32 * | 1-15 | |
| X | WO 2023/009423 A1 (COVESTRO LLC [US]) 2 February 2023 (2023-02-02) * claims 1-33 * | 1-15 | |
| X | EP 3 184 575 A1 (COVESTRO LLC [US]) 28 June 2017 (2017-06-28) * claims 1-14 * | 1-15 | |

**TECHNICAL FIELDS SEARCHED (IPC)**

C08G
C09J

The present search report has been drawn up for all claims

| Place of search | Date of completion of the search | Examiner |
|---|---|---|
| Munich | 29 February 2024 | Scheuer, Sylvie |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

**EP 23 46 1654**

This annex lists the patent family members relating to the patent documents cited in the above-mentioned European search report.
The members are as contained in the European Patent Office EDP file on
The European Patent Office is in no way liable for these particulars which are merely given for the purpose of information.

**29-02-2024**

| Patent document cited in search report | Publication date | Patent family member(s) | | Publication date |
|---|---|---|---|---|
| WO 2018136189 A1 | 26-07-2018 | AU | 2017394687 A1 | 08-08-2019 |
| | | BR | 112019014008 A2 | 11-02-2020 |
| | | CN | 110167984 A | 23-08-2019 |
| | | EP | 3571238 A1 | 27-11-2019 |
| | | ES | 2880289 T3 | 24-11-2021 |
| | | HU | E055467 T2 | 29-11-2021 |
| | | JP | 7204650 B2 | 16-01-2023 |
| | | JP | 2020514474 A | 21-05-2020 |
| | | PL | 3571238 T3 | 20-12-2021 |
| | | US | 2019330406 A1 | 31-10-2019 |
| | | WO | 2018136189 A1 | 26-07-2018 |
| WO 2013043645 A1 | 28-03-2013 | CN | 103814081 A | 21-05-2014 |
| | | MX | 340837 B | 27-07-2016 |
| | | US | 2013079429 A1 | 28-03-2013 |
| | | US | 2015076400 A1 | 19-03-2015 |
| | | US | 2015141543 A1 | 21-05-2015 |
| | | WO | 2013043645 A1 | 28-03-2013 |
| WO 2023009423 A1 | 02-02-2023 | US | 2023039276 A1 | 09-02-2023 |
| | | WO | 2023009423 A1 | 02-02-2023 |
| EP 3184575 A1 | 28-06-2017 | CN | 106905523 A | 30-06-2017 |
| | | EP | 3184575 A1 | 28-06-2017 |
| | | US | 2017174834 A1 | 22-06-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11124595 B2, Ahmadloo, Cookson, Borella
- US 6083420 A, Lear, Sloan and Pazos
- US 8975335 B2, Hager, Britt, McVey
- US 9879114 B2, Reese, Bowles and Browne
- US 20130079429 A1
- WO 2023009423 A1

**Non-patent literature cited in the description**

- Reaction of Isocyanates with Cyclic Anhydrides. **M. IONESCU**. Chemistry and Technology of Polyols for Polyurethanes. Rapra Technology, 2005, 18
- General Characteristics of oligo-polyols. **M. IONESCU**. Chemistry and Technology of Polyols for Polyurethanes. Rapra Technology, 2005, 31-49